# EUROPÄISCHE PATENTANMELDUNG

(11) **EP 4 643 975 A2**
(43) Veröffentlichungstag der Anmeldung: **05.11.2025**
(21) Anmeldenummer: 25173221.0
(22) Anmeldetag: 29.04.2025
(51) Int. Cl.: B01D 53/04, B01D 53/047, B01D 53/26

(54) **VERFAHREN UND ANLAGE ZUR ABTRENNUNG VON KOHLENSTOFFDIOXID AUS DER UMGEBUNGSLUFT**

(30) Priorität: 03.05.2024 DE 102024112491
(71) Anmelder: VOLKSWAGEN AG, 38440 Wolfsburg (DE)
(72) Erfinder: Heimermann, Christian, 38442 Wolfsburg (DE); Rüggeberg, Marc, 38124 Braunschweig (DE); Wiegel, Marcel, 39649 Gardelegen / OT Sachau (DE)
(74) Vertreter: Gulde & Partner

(57) **Zusammenfassung**

Die Erfindung betrifft ein Verfahren zur Abtrennung von Kohlenstoffdioxid aus der Umgebungsluft. Das Verfahren umfasst folgende Schritte:
- Bestimmung von aktuellen und/oder zukünftigen Wetterparametern am Standort der Anlage (10),
- Fördern eines Luftstroms (68) der Umgebungsluft in einen ersten Prozessraum (26), wobei der Luftstrom (68) in dem ersten Prozessraum (26) getrocknet wird,
- Adsorbieren von Kohlenstoffdioxid (48) aus dem getrockneten Luftstrom (68) mit einem Physisorbenten (23) in einem zweiten Prozessraum (27),
- Desorbieren des in dem Physisorbenten (23) adsorbierten Kohlenstoffdioxids (48),
- Einlagern des desorbierten Kohlenstoffdioxids (48) in einer Speichereinheit (16).

Es ist vorgesehen, dass eine Anpassung der Prozesszeiten der Anlage (10), der Leistungsparameter der Anlage (10) und/oder des Luftstroms durch die Anlage (10) in Abhängigkeit von den aktuellen oder zukünftigen Wetterparametern erfolgt.

Die Erfindung betrifft ferner eine Anlage (10) zur Durchführung eines solchen Verfahrens.

## Beschreibung

Die Erfindung betrifft ein Verfahren zur Abtrennung von Kohlenstoffdioxid aus der Umgebungsluft sowie eine Anlage zur Durchführung eines solchen Verfahrens gemäß dem Oberbegriff der unabhängigen Patentansprüche.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture"-Verfahren durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen. Typischerweise werden zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie bspw. eine inerte Atmosphäre im System durch den Einsatz von Wasserdampf oder anderen Gasen. Diese Schutzmaßnahmen sind aufwendig und teuer.

Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss. Eine solche Trocknung der Luft ist ebenfalls aufwendig und teuer.

Um eine effiziente Abtrennung von Kohlenstoffdioxid aus der Umgebungsluft zu erreichen, werden Anlagen zur Abtrennung von Kohlenstoffdioxid bevorzugt mit erneuerbaren Energien, insbesondere mit Wasserkraft, Geothermie, Windkraft oder Solarenergie betrieben. Ein Betrieb mit Wasserkraft oder Geothermie wäre vorteilhaft, da diese kontinuierlich und zuverlässig zur Verfügung gestellt werden kann. Jedoch ist das Potenzial für die Energiegewinnung von Wasserkraft auf entsprechende Flussläufe reduziert und wird schon heute in vielen Regionen nahezu vollständig ausgenutzt, sodass eine Ausweitung der Nutzung von Wasserkraft limitiert ist.

Solarenergie und Windkraft können im Wesentlichen ortsunabhängig verwendet werden, die Nutzung ist jedoch durch den Umlauf der Sonne und/oder die Wetterbedingungen am Standort beschränkt.

Die US 2021 / 0 387 133 A1 beschreibt eine Vorrichtung zur Adsorption von atmosphärischem Kohlenstoffdioxid. Die Vorrichtung umfasst eine Adsorptionseinheit zur passiven Aufnahme von Kohlenstoffdioxid und eine Desorptionseinheit zur Abgabe des aufgenommenen Kohlenstoffdioxids. Dabei ist die Aufnahmevorrichtung zur Adsorption und Desorption von Kohlenstoffdioxid verschiebbar in der Vorrichtung angeordnet, um die Aufnahmevorrichtung von einer Adsorptionskammer in eine Desorptionskammer zu verschieben.

Die US 2023 / 0 173 428 A1 beschreibt eine Anlage zur Abtrennung von Kohlenstoffdioxid aus der Umgebungsluft nach dem Direct-Air-Capture-Verfahren. Die Anlage umfasst eine Windturbine, welche elektrische Energie erzeugt, eine Adsorptionskammer zur Abtrennung von Kohlenstoffdioxid aus der Umgebungsluft, in welcher ein Chemiesorbent angeordnet ist sowie ein Wasserreservoir, aus welchem ein Wasserdampf erzeugt wird, um die Adsorptionskammer mit Wasserdampf zu spülen.

Der Erfindung liegt nun die Aufgabe zugrunde, die Energieeffizienz und Ausbeute an Kohlenstoffdioxid bei einer Anlage zur Abtrennung von Kohlenstoffdioxid mit einem Sorbentmaterial, insbesondere einem Physisorbenten zu verbessern und die aus dem Stand der Technik bekannten Nachteile zumindest teilweise zu überwinden.

Die Aufgabe wird durch ein Verfahren zur Abtrennung von Kohlenstoffdioxid aus der Umgebungsluft in einer Anlage zur Abtrennung von Kohlenstoffdioxid aus der Umgebungsluft gelöst. Das Verfahren umfasst folgende Schritte:
- Bestimmung von aktuellen und/oder zukünftigen Wetterparametern am Standort der Anlage,
- Fördern eines Luftstroms der Umgebungsluft in einen ersten Prozessraum, wobei der Luftstrom in dem ersten Prozessraum getrocknet wird,
- Adsorbieren von Kohlenstoffdioxid aus dem getrockneten Luftstrom mit einem Physisorbenten in einem zweiten Prozessraum,
- Desorbieren des in dem Physisorbenten adsorbierten Kohlenstoffdioxids, und
- Einlagern des desorbierten Kohlenstoffdioxids in einer Speichereinheit.

Erfindungsgemäß ist vorgesehen, dass eine Anpassung der Prozesszeiten der Anlage, der Leistungsparameter der Anlage und/oder des Luftstroms durch die Anlage in Abhängigkeit von den aktuellen oder zukünftigen Wetterparametern erfolgt.

Das erfindungsgemäße Verfahren erlaubt es, die Leistung der Anlage zur Abtrennung von Kohlenstoffdioxid an die am Standort vorherrschenden Wetterbedingungen anzupassen und auf diese Art und Weise die Effizienz des Verfahrens zu erhöhen. Die Kenntnis der Wetterdaten führt dazu, dass die Energiemenge, welche über erneuerbare Energien wie Windkraft oder Solarkraft zur Verfügung gestellt werden kann, abgeschätzt werden kann und gegebenenfalls Maßnahmen eingeleitet werden können, um bei ungünstigen Wetterbedingungen und einer geringeren zu erwartenden Energiemenge aus regenerativen Energien die Prozessführung in der Anlage entsprechend anzupassen. Ferner kann die Prozessführung auch bei hinreichender Energiemenge angepasst werden, wenn die Wetterparameter für die Abtrennung von Kohlenstoffdioxid ungünstig sind, beispielsweise bei hohen Temperaturen und hoher relativer Luftfeuchte, wodurch die Trocknungszeit der Luft in der Trocknungseinheit verlängert werden kann.

Durch die in den abhängigen Ansprüchen aufgeführten zusätzlichen Merkmale sind vorteilhafte Weiterentwicklungen und Verbesserungen des im unabhängigen Anspruch aufgeführten Verfahrens zum Abtrennen von Kohlenstoffdioxid aus der Umgebungsluft möglich.

In bevorzugter Ausgestaltung des Verfahrens ist vorgesehen, dass die Anpassung der Prozesszeiten, der Leistungsparameter und/oder des Luftstroms in Abhängigkeit einer Prognose für die Wetterparameter für einen definierten Vorhersagezeitraum erfolgt. Durch die Berücksichtigung der Prognosedaten für einen definierten Vorhersagezeitraum können Abschaltungen der Anlage, insbesondere zur Durchführung von Wartungen, geplant werden. Dabei kann der Prognosezeitraum wenige Stunden bis mehrere Tage, vorzugsweise zwei Stunden bis zwei Wochen, betragen. So kann insbesondere bei einer mit Windkraft betriebenen Anlage auf eine bevorstehende Flaute oder bei einer mit Solarstrom betriebenen Anlage auf eine Phase reagiert werden, in welcher die Sonne nicht oder nur selten scheint, sodass der über die regenerativen Energien erzeugte Strom nicht oder nicht vollständig ausreicht, um den Prozess mit den optimalen Betriebsparametern durchzuführen. Alternativ zu einer Abschaltung können auch die Prozesszeiten in einzelnen Prozessschritten angepasst werden, um auf eine geringere Energiemenge reagieren zu können.

In weiterer bevorzugter Ausgestaltung des Verfahrens ist vorgesehen, dass die Wetterparameter eine Windrichtung und/oder eine Windstärke am Standort der Anlage umfassen. Die Erfassung der Windrichtung und der Windstärke hat nicht nur Einfluss auf die mittels Windenergie zur Verfügung stehende Energiemenge, sondern kann auch den Luftstrom durch die Anlage beeinflussen. So kann beispielsweise die Förderleistung es Förderelements in Abhängigkeit von der Windrichtung und der Windstärke angepasst werden, um den Luftstrom durch die Prozessräume der Anlage an die am Standort der Anlage vorherrschenden Wetterbedingungen anzupassen.

Alternativ oder zusätzlich ist mit Vorteil vorgesehen, dass die Wetterparameter eine Temperatur am Standort der Anlage umfassen. Da die Umgebungsluft mit steigender Temperatur mehr Luftfeuchtigkeit aufnehmen kann, hat die Lufttemperatur direkten Einfluss auf den Trocknungsprozess der der Anlage zugeführten Umgebungsluft. Ferner wird mit steigender Umgebungstemperatur weniger Energie benötigt, um die Luft aufzuheizen, dafür aber mehr, um sie bei Bedarf abzukühlen. Entsprechend kann über die benötigte Energiemenge in Abhängigkeit von der Umgebungstemperatur und gegebenenfalls weiteren Wetterparametern abgeschätzt und entsprechend angepasst werden.

Ferner ist alternativ oder zusätzlich mit Vorteil vorgesehen, dass die Wetterparamater eine relative Luftfeuchtigkeit der Umgebungsluft am Standort der Anlage umfassen. Die Luftfeuchtigkeit beeinflusst die Effizienz einer Physi-Sorbentbasierten Anlage zur Abtrennung von Kohlenstoffdioxid aus der Umgebungsluft stark. Entsprechend kann die Kenntnis der aktuellen und vorausgesagten Luftfeuchtigkeit zur Absenkung des Energiebedarfs genutzt werden. So erfolgt beispielsweise eine Anpassung der Adsorptionszeiten in der Trocknungseinheit. So kann beispielsweise bei geringer Luftfeuchtigkeit der Trocknungsprozess verkürzt und die Adsorptionszeit verlängert werden. Damit kann die Adsorptionszeit in Relation zu der Desorptionszeit verlängert werden, wodurch die Energieeffizienz des Prozesses gesteigert werden kann, da weniger Energie-intensive Desorptionszyklen notwendig sind.

Für eine mit Solarstrom betriebene Anlage ist es besonders vorteilhaft, wenn die Wetterparameter eine Stärke der Sonneneinstrahlung und/oder eine Verschattung am Standort der Anlage umfassen. Die über Solarenergie, insbesondere über Photovoltaik zur Verfügung stehende Energiemenge ist nicht nur von der Tages- und Jahreszeit, sondern auch von der Sonnenintensität am Standort der Anlage abhängig. So steht die Sonne im Winter zur gleichen Tageszeit flach am Horizont als im Sommer, wodurch die verfügbare Energiemenge reduziert ist. Ferner ist der Zeitraum von Sonnenaufgang bis Sonnenuntergang im Winter kürzer als im Sommer, wodurch die mögliche Energieausbeute nochmals verringert ist. Auch Wetterphänomene wie Wolken führen zu einer Einschränkung der Energiemenge und können im Rahmen einer Wetterprognose abgeschätzt werden, sodass beispielsweise in einer Periode ohne direkte Sonneneinstrahlung eine Wartung der Anlage geplant werden kann.

In einer vorteilhaften Ausgestaltung des Verfahrens ist vorgesehen, dass eine Anpassung der Prozesszeiten durch eine Ansteuerung von Verschlusselementen erfolgt, welche zumindest einen der Prozessräume verschließen. Zur optimalen Prozessführung werden der erste Prozessraum zur Trocknung und der zweite Prozessraum zur Adsorption von Kohlenstoffdioxid in der Regel mit Verschlusselementen versehen, um den Prozessraum temporär von der Umgebung zu entkoppeln. Dadurch ist eine einfache Manipulation der im Prozessraum befindlichen Luft, insbesondere ein Aufheizen oder Abkühlen der Luft oder des Trocknungsmaterials und/oder des Sorbentmaterials, oder eine Absenkung des Luftdrucks im Prozessraum möglich. Durch die Ansteuerung der Schließelemente kann somit auf einfache Art und Weise die Prozesszeit in dem entsprechenden Prozessraum angepasst werden.

In einer weiteren bevorzugten Ausführungsform des Verfahrens ist vorgesehen, dass eine Anpassung der Prozesszeiten durch eine Anpassung des Luftstroms durch die Anlage erfolgt. So kann beispielsweise das Verhältnis aus energieintensiver Desorptionszeit zur Adsorptionszeit verringert werden, wenn weniger Energie aus erneuerbaren Energien zur Verfügung steht. Bei reduziertem Luftdurchsatz verlängert sich die maximale Adsorptionszeit bei gleichbleibender Desorptionszeit.

In einer vorteilhaften Ausgestaltung des Verfahrens ist vorgesehen, dass eine Anpassung der Leistungsregelung für ein Förderelement zur Förderung des Luftstroms durch die Anlage erfolgt. Dabei kann über eine Leistungsregelung die Fördermenge und/oder die Fördergeschwindigkeit des Förderelements, insbesondere eines Gebläses, angepasst werden.

Alternativ oder zusätzlich ist mit Vorteil vorgesehen, dass eine Anpassung der Heizleistung des Heizelements in einem der Prozessräume oder an beiden Prozessräumen erfolgt. Da das Aufheizen der Prozessräume ebenfalls energieintensiv ist, kann bei einer geringeren Menge an zur Verfügung stehenden Energie aus erneuerbaren Energiequellen die Heizleistung reduziert werden, wodurch sich die Prozesszeit erhöht. Jedoch kann der Prozess durch die Reduzierung der Heizleistung weiterhin vollständig durch erneuerbare Energien sichergestellt werden, wodurch zusätzliche Kohlenstoffdioxidemissionen vermieden werden können.

In einer weiteren vorteilhaften Ausgestaltung des Verfahrens ist vorgesehen, dass eine Prozesszeit der Desorption im Verhältnis zur Prozesszeit der Adsorption verlängert wird, wenn die Wetterdaten erwarten lassen, dass eine reduzierte Energiemenge zur Versorgung der Anlage aus erneuerbaren Energien verfügbar ist.

In einer weiteren vorteilhaften Ausgestaltung des Verfahrens ist vorgesehen, dass die Anlage abgeschaltet wird, wenn die Wetterdaten erwarten lassen, dass die zur Prozessführung notwendige Energie nicht durch erneuerbare Energien aus Windkraft oder Solarkraft bereitgestellt werden kann. Ein Abschalten der Anlage kann notwendig sein, wenn die für eine Prozessführung notwendigen Betriebsparameter, insbesondere die Prozesstemperatur zur Desorption von Kohlenstoffdioxid, nicht mehr erreicht werden können. Durch die Vorhersage einer solchen Abschaltung auf Basis der Wetterdaten können entsprechende Anpassungen, beispielsweise bei der Personalplanung, erfolgen, sodass die Kosten reduziert werden können. Alternativ kann in einer solchen Abschaltphase eine Wartung oder Instandsetzung der Anlage erfolgen, sodass die Anlage wieder zur Verfügung steht, wenn die Wetterbedingungen einen effizienten Betrieb aus erneuerbaren Energien erwarten lassen.

In einer weiteren vorteilhaften Ausgestaltung des Verfahrens ist vorgesehen, dass die Trocknungszeit in der Trocknungseinheit verkürzt wird, wenn die relative Luftfeuchte der Umgebungsluft oder der Wassergehalt der Umgebungsluft einen Schwellenwert übersteigt. Da Physisorbenten, insbesondere Zeolithe eine höhere Affinität für Wasserdampf als für Kohlenstoffdioxid aufweisen, ist eine hinreichende Trocknung der Umgebungsluft notwendig, um eine effiziente Abtrennung von Kohlenstoffdioxid überhaupt erst zu ermöglichen. Daher kann es notwendig sein, die Trocknungszeit anzupassen, um zu verhindern, dass Umgebungsluft mit einer zu hohen Restfeuchte dem zweiten Prozessraum zur Adsorption von Kohlenstoffdioxid zugeführt wird. Eine hohe relative Luftfeuchte führt dazu, dass der Luftmassenstrom verringert werden muss und/oder eine Regeneration des Trocknungsmaterials früher eingeleitet werden muss, um eine hinreichende Entfeuchtung für die nachfolgende Adsorption von Kohlenstoffdioxid sicherzustellen.

Ein weiterer Teilaspekt der Erfindung betrifft eine Anlage zur Abtrennung von Kohlenstoffdioxid aus der Umgebungsluft, umfassend:
- ein Förderelement zur Förderung eines Luftstroms der Umgebungsluft in einen ersten Prozessraum, wobei der Luftstrom in dem ersten Prozessraum getrocknet wird,
- eine Sorptionseinheit zum Adsorbieren von Kohlenstoffdioxid aus dem getrockneten Luftstrom mit einem Physisorbenten in einem zweiten Prozessraum, sowie zum anschließenden Desorbieren des in dem Physisorbenten adsorbierten Kohlenstoffdioxids, und
- eine Speichereinheit zum Einlagern des desorbierten Kohlenstoffdioxids,
- ein Wetterprognosemodul, sowie
- eine Steuerungseinheit, wobei die Steuerungseinheit dazu eingerichtet ist, ein solches Verfahren auszuführen.

Die erfindungsgemäße Anlage erlaubt es, die Leistung der Anlage zur Abtrennung von Kohlenstoffdioxid an die am Standort vorherrschenden Wetterbedingungen anzupassen und auf diese Art und Weise die Effizienz der Anlage zu erhöhen. Die Kenntnis der Wetterdaten führt dazu, dass die Energiemenge, welche über erneuerbare Energien wie Windkraft oder Solarkraft zur Verfügung gestellt werden kann, abgeschätzt werden kann und gegebenenfalls Maßnahmen eingeleitet werden können, um bei ungünstigen Wetterbedingungen und einer geringeren zu erwartenden Energiemenge aus regenerativen Energien die Prozessführung in der Anlage entsprechend anzupassen. Ferner kann die Prozessführung auch bei hinreichender Energiemenge angepasst werden, wenn die Wetterparameter für die Abtrennung von Kohlenstoffdioxid ungünstig sind, beispielsweise bei hohen Temperaturen und hoher relativer Luftfeuchte, wodurch die Trocknungszeit der Luft in der Trocknungseinheit verkürzt werden kann. Alternativ kann in diesem Beispiel der Luftmassenstrom reduziert werden, um bei gleicher Trocknungsdauer die gleiche Menge Wasser in das Sorbentmaterial einzutragen.

In einer bevorzugten Ausgestaltung der Anlage ist vorgesehen, dass der erste Prozessraum und/oder der zweite Prozessraum einen Bypass aufweisen, durch welchen der Luftstrom an der Trocknungseinheit und/oder an der Sorptionseinheit vorbeigeführt werden kann. In Abhängigkeit von der Windrichtung und der Windstärke kann es sein, dass der Wind einen Luftstrom ausbildet, welcher zu einer zu hohen Fördergeschwindigkeit des Luftstroms durch die Anlage führen würde. In diesem Fall kann es vorteilhaft sein, wenn an zumindest einem der Prozessräume, vorzugsweise an beiden Prozessräumen, ein Bypass vorgesehen ist, um zumindest einen Teilstrom der Luft an dem Sorptionselement oder der Trocknungseinheit vorbeizuführen und somit die Luftmenge anzupassen. Dabei ist vorgesehen, dass die an dem ersten Prozessraum zur Trocknung vorbeigeführte Umgebungsluft nicht dem zweiten Prozessraum zur Adsorption von Kohlenstoffdioxid zugeführt wird, da die enthaltene Luftfeuchte der an dem ersten Prozessraum vorbeigeführten Umgebungsluft den Adsorptionsprozess im zweiten Prozessraum stören würde.

In einer vorteilhaften Ausgestaltung der Anlage ist es vorgesehen, dass die Anlage mit einer Windkraftanlage und/oder einer Solarkraftanlage verbunden ist, welche die elektrische Energie zur Energieversorgung der Anlage bereitstellt. Um eine besonders effiziente Abtrennung von Kohlenstoffdioxid aus der Atmosphäre zu erreichen, wird die Anlage vorzugsweise mit erneuerbaren Energien betrieben, welche im Betrieb zu keinen weiteren Kohlenstoffdioxidemissionen führen. Anlagen zur Stromerzeugung aus Windkraft und Solarenergie haben gegenüber anderen erneuerbaren Energien wie Wasserkraft den Vorteil, dass sie im Wesentlichen ortsunabhängig genutzt werden können und somit nicht den potenziellen Standort der Anlage limitieren, sondern an diesem Standort errichtet werden können.

Gemäß einer bevorzugten Ausgestaltung der Anlage ist vorgesehen, dass das Wetterprognosemodul über eine Datenverbindung mit einer externen Datenquelle verbunden ist, welche die Wetterdaten zur Verfügung stellt. Durch die Versorgung des Wetterprognosemoduls mit externen Daten ist eine besonders exakte Vorhersage der zu erwartenden Wetterparameter möglich.

Alternativ oder zusätzlich ist mit Vorteil vorgesehen, dass das Wetterprognosemodul einen Sensor für Luftfeuchte, für die Windgeschwindigkeit, für die Sonneneinstrahlung und/oder einen Temperatursensor umfasst. Dadurch können vor Ort auf einfache Art und Weise die aktuellen Wetterparameter bestimmt und zukünftige Wetterparameter prognostiziert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel einer erfindungsgemäßen Anlage zur Abtrennung von Kohlenstoffdioxid aus der Umgebungsluft, welche eine Trocknungseinheit, eine Sorptionseinheit und eine Speichereinheit aufweist.
- Figur 2: ein Ablaufdiagramm für ein erfindungsgemäßes Verfahren zur Abtrennung von Kohlenstoffdioxid aus der Umgebungsluft unter Berücksichtigung von Wetterparametern.

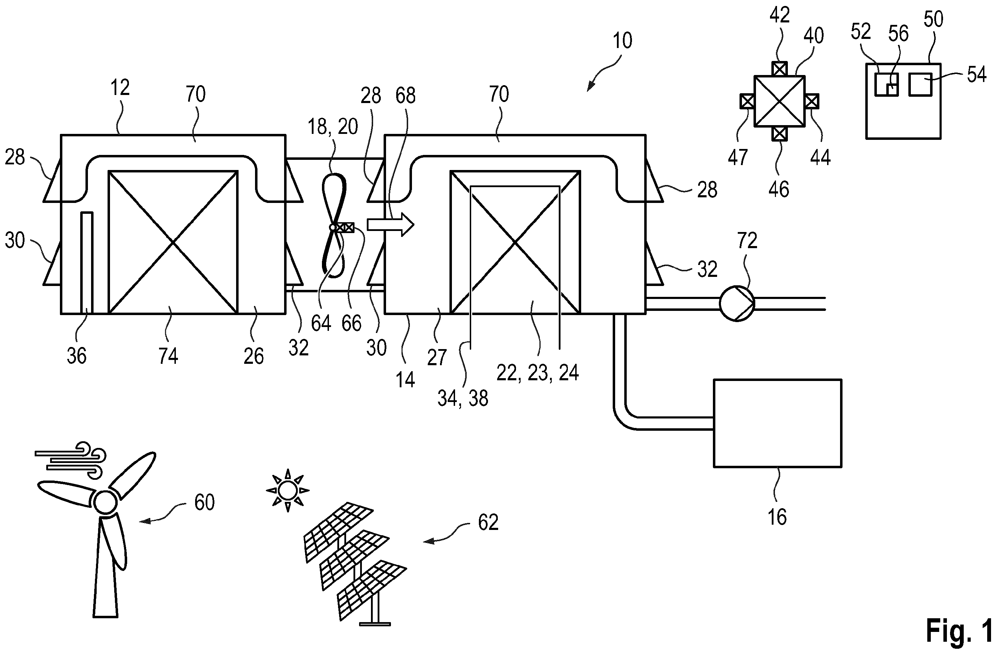

Figur 1 zeigt eine Anlage 10 zur Abtrennung von Kohlenstoffdioxid aus der Umgebungsluft. Dabei wird der Anlage 10 Umgebungsluft zugeführt und dieser Luft Kohlenstoffdioxid und Wasser entzogen. Aus der Anlage 10 strömt ein Abluftstrom aus, welcher gegenüber der einströmenden Luft trockene, Kohlenstoffdioxid-reduzierte Luft aufweist. Die Anlage 10 umfasst eine Trocknungseinheit 12, in welcher dem Luftstrom 68 die in der Umgebungsluft enthaltene Luftfeuchte zumindest teilweise entzogen wird. Als Trocknungsmaterial 74 für die Trocknungseinheit kann beispielsweise ein hydrophiles Material wie Silica-Gel verwendet werden. Prinzipiell kann jedes Trocknungsmaterial verwendet werden, welches dazu geeignet ist, Feuchtigkeit aus der Luft aufzunehmen. Bevorzugt wird ein Trocknungsmaterial verwendet, welches durch eine entsprechende Prozessführung nach der Aufnahme der Luftfeuchte wieder regeneriert und erneut dem Prozess zugeführt werden kann. Dabei wird ein Trocknungsgrad der Umgebungsluft angestrebt, bei welchem die Restfeuchte der Luft einen Taupunkt von maximal -30 °C, vorzugsweise -50 °C, besonders bevorzugt maximal -60 °C Taupunkt beträgt. Die Anlage 10 umfasst ferner eine Sorptionseinheit 14, in welcher das Kohlenstoffdioxid aus der Umgebungsluft gebunden wird. Dabei wird das sich in der getrockneten Umgebungsluft befindliche Kohlenstoffdioxid 48 in einem Sorbentmaterial 22, insbesondere in einem Physisorbenten 23, besonders bevorzugt in einem Zeolithmaterial 24 eingespeichert.

Darüber hinaus weist die Anlage 10 eine Speichereinheit 16 auf, in welcher das in der Sorptionseinheit 14 aus der Umgebungsluft abgetrennte Kohlenstoffdioxid 48 in konzentrierter Form eingespeichert wird. Die Anlage 10 umfasst ferner mindestens ein Förderelement 18, insbesondere ein Gebläse 20, mit welchem ein Luftstrom an Umgebungsluft durch die Trocknungseinheit 12 und anschließend durch die Sorptionseinheit 14 geführt wird.

Die Trocknung der Luft erfolgt vorzugsweise in einem ersten Prozessraum 26, welcher durch Verschlusselemente 28, insbesondere durch Klappen 30, 32 im Wesentlichen gasdicht von der Umgebung abgetrennt werden kann. Dabei weist der erste Prozessraum 26 in dem dargestellten Ausführungsbeispiel zwei Einlassklappen 30 und zwei Auslassklappen 32 auf. Ferner ist ein Bypass 70 vorgesehen, um einen Gasstrom an dem Trocknungsmaterial 74 vorbeiführen zu können. Dieser Gasstrom durch den Bypass wird dann wieder in die Umgebung abgeführt, um die Zufuhr von feuchter Luft in einen zweiten Prozessraum 27 zur Adsorption von Kohlenstoffdioxid zu vermeiden. In dem ersten Prozessraum 26 können ein Heizelement 34 und/oder ein Kühlelement 36 angeordnet sein, um die Lufttemperatur in der Trocknungseinheit 12 beziehungsweise im ersten Prozessraum 26 zu manipulieren. Insbesondere kann ein Kühlelement 36 zur Kühlung der Luft nach der Trocknung vorgesehen werden, um eine möglichst effiziente Adsorption von Kohlenstoffdioxid in einem nachfolgende Prozessschritt zu ermöglichen.

Die Adsorption und anschließende Desorption von Kohlenstoffdioxid erfolgt vorzugsweise in einem zweiten Prozessraum 27, welcher durch Verschlusselemente 28, insbesondere durch Klappen 30, 32 im Wesentlichen gasdicht von der Umgebung abgetrennt werden kann. Ferner weist der zweite Prozessraum 27 ein Heizelement 34, insbesondere einen Wärmetauscher 38 auf, um die Temperatur insbesondere beim Desorptionsprozess entsprechend anheben zu können und das im Sorbentmaterial 22 adsorbierte Kohlenstoffdioxid 48 wieder freizusetzen. Der zweite Prozessraum 27 beziehungsweise die Sorptionseinheit 14 kann ebenfalls einen Bypass 70 aufweisen, um einen Luftstrom 68 an Umgebungsluft an dem Sorbentmaterial 22 vorbeizuführen und wieder an die Umgebung abzugeben.

Ferner kann an dem zweiten Prozessraum 27 eine Unterdruckpumpe 72 angeordnet sein, um den Luftdruck in dem zweiten Prozessraum 27 zu manipulieren und insbesondere während eines Desorptionsprozesses abzusenken. Der zweite Prozessraum 27 ist fluidisch mit der Speichereinheit 16 verbunden, in welcher das aus der Umgebungsluft abgetrennte Kohlenstoffdioxid 48 eingelagert werden kann. Die Unterdruckpumpe 72 kann auch in der Leitung zwischen dem zweiten Prozessraum 27 und der Speichereinheit 16 angeordnet sein, um das während des Desorptionsprozesses freigesetzte Kohlenstoffdioxid 48 aus dem zweiten Prozessraum 27 abzusaugen und der Speichereinheit 16 zuzuführen.

Zwischen der Trocknungseinheit 12 und der Sorptionseinheit 14 ist ein Förderelement 18, insbesondere ein Gebläse 20 vorgesehen, um einen Luftstrom 68 der Umgebungsluft zunächst durch die Trocknungseinheit 12 und anschließend durch die Sorptionseinheit 14 zu fördern. Das Förderelement 18 weist eine Antriebseinheit 64 auf, deren Leistung über eine Leistungsregelung 66 entsprechend angepasst werden kann.

Die Anlage 10 weist ferner ein Wetterprognosemodul 40 auf, welches verschiedene Sensoren 42, 44, 46, 47 zur Erfassung von aktuellen Wetterdaten umfassen kann. In Figur 1 ist ein Wetterprognosemodul dargestellt, welches einen Sensor 42 zur Erfassung der Luftfeuchte, einen Sensor 44 zur Erfassung der Windgeschwindigkeit, einen Sensor 46 zur Erfassung der Sonneneinstrahlung und einen Temperatursensor 47 aufweist. Das Wetterprognosemodul 40 kann ferner über eine Datenverbindung 76 mit einer externen Datenquelle 78 in Verbindung stehen, um Wetterdaten zu senden und/oder zu empfangen, um die Prognose der Wetterparameter zu verbessern.

Die Anlage 10 wird vorzugsweise aus erneuerbaren Energien wie Windkraft oder Solarenergie mit Strom versorgt, um beim Betrieb keine zusätzlichen Kohlenstoffdioxidemissionen zu erzeugen. Dazu ist eine Windkraftanlage 60 und/oder eine Solaranlage 62, insbesondere eine Photovoltaikanlage, vorgesehen, um die Anlage 10 mit erneuerbarer Energie zu versorgen.

Die Anlage 10 weist ferner eine Steuerungseinheit 50 mit einer Speichereinheit 52 und einer Recheneinheit 54 auf, wobei in der Speichereinheit 52 ein Computerprogrammcode 56 abgelegt ist, welcher dazu eingerichtet ist, bei Ausführung durch die Recheneinheit 54 der Steuerungseinheit 50 den Betrieb der Anlage 10 zur Abtrennung von Kohlenstoffdioxid 48 aus der Umgebungsluft zu steuern.

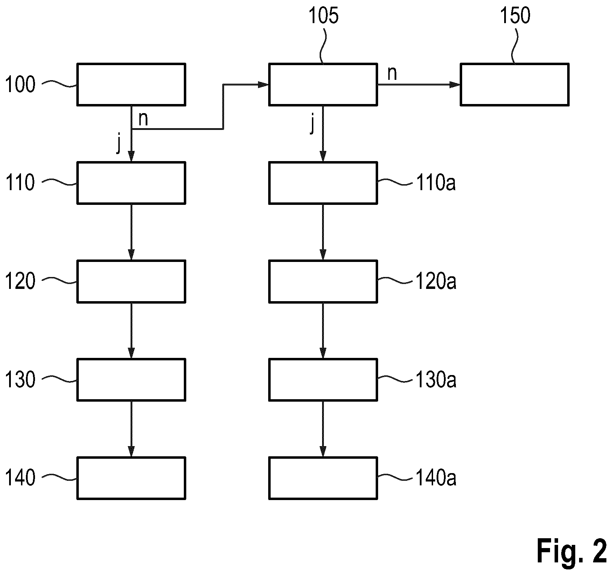

In Figur 2 ist ein Ablaufdiagramm zur Durchführung eines erfindungsgemäßen Verfahrens zur Abtrennung von Kohlenstoffdioxid 48 aus der Umgebungsluft dargestellt. In einem ersten Verfahrensschritt <100> erfolgt eine Bestimmung von aktuellen und/oder zukünftigen Wetterparametern am Standort der Anlage. Solche Wetterdaten können insbesondere eine Luftfeuchtigkeit, eine Windrichtung und/oder Windstärke, eine Temperatur, eine Dauer und Intensität der Sonneneinstrahlung und weitere Umgebungsparameter am Standort der Anlage 10 umfassen. Lassen die aktuellen Wetterdaten und die in naher Zukunft, insbesondere in den nächsten Stunden zu erwartenden Wetterdaten einen ungestörten Betrieb der Anlage 10 zu, so wird in einem Verfahrensschritt <110> ein Luftstrom 68 der Umgebungsluft in einen ersten Prozessraum 26 der Anlage 10 gefördert, wobei der Luftstrom 68 in dem ersten Prozessraum 26 durch das Trocknungsmaterial 74 getrocknet wird. In einem Verfahrensschritt <120> erfolgt anschließend eine Adsorption von Kohlenstoffdioxid 48 aus dem getrockneten Luftstrom 68 mit einem Physisorbenten 23 in einem zweiten Prozessraum 27.

In einem Prozessschritt <130> erfolgt eine Desorption des in dem Physisorbenten 23 adsorbierten Kohlenstoffdioxids 48, wobei das Kohlenstoffdioxid in den zweiten Prozessraum 27 abgegeben wird.

In einem Prozessschritt <140> wird das in dem zweiten Prozessraum 27 desorbierte Kohlenstoffdioxid 48 aus dem zweiten Prozessraum 27 abgeführt und in einer Speichereinheit 16 eingelagert. Diese Prozessschritt <140> kann parallel zu dem oder nachfolgend auf den Prozessschritt <130> erfolgen.

Ist auf Basis der im Prozessschritt <100> erfassten aktuellen und/oder zu erwartenden Wetterparameter zu erwarten, dass die Leistung der erneuerbaren Energiequellen 60, 62 nicht die zum Normalbetrieb der Anlage nötigen elektrischen Energien bereitstellen können, so wird in einem Verfahrensschritt <105> geprüft, ob ein effizienter Betrieb der Anlage 10 mit angepassten Betriebsparametern möglich ist. Ist dies nicht möglich, so erfolgt in einem Verfahrensschritt <150> ein Abschalten der Anlage 10, wobei die Abschaltung dazu genutzt werden kann, Wartungs- oder Instandsetzungsarbeiten an der Anlage 10 durchzuführen. Ferner können geplante Abschaltung bei der Personalplanung berücksichtigt werden, sodass die Personalkosten und damit verbundenen Betriebskosten der Anlage 10 reduziert werden können.

Ist ein Betrieb mit angepassten Betriebsparametern möglich, so wird in einem Verfahrensschritt <110a> ein Luftstrom 68 der Umgebungsluft in einen ersten Prozessraum 26 der Anlage 10 gefördert, wobei der Luftstrom 68 in dem ersten Prozessraum 26 durch das Trocknungsmaterial 74 getrocknet wird. So kann insbesondere zur Anpassung der Prozesszeiten die durch die Anlage 10 durchgesetzte Luftmenge des Luftstroms 68 angepasst werden. Steht beispielsweise weniger Energie zur Verfügung, ist es hilfreich, das Verhältnis aus energieintensiver Desorptionszeit zur Adsorptionszeit zu verringern. Bei reduziertem Luftdurchsatz verlängert sich die maximale Adsorptionszeit bei gleichbleibender Desorptionszeit.

Da die Luftfeuchte signifikanten Einfluss auf die Prozessführung hat, kann entsprechend die Kenntnis der aktuellen und vorausgesagten Luftfeuchtigkeit zur Absenkung des Energiebedarfs genutzt werden. So kann bei geringer Luftfeuchtigkeit der Trocknungsprozess der Luft relativ zur Desorptionsdauer verlängert werden, wodurch die Energieeffizienz des Prozesses gesteigert wird. Alternativ kann im Verfahrensschritt <110a> die Trocknungszeit verlängert werden, wenn weniger Energie zur Trocknung des Luftstroms 68 zur Verfügung steht, um eine hinreichende Trocknung der Luft für den nachfolgenden Adsorptionsprozess mittels des Physisorbenten 23 sicherzustellen.

In einem Verfahrensschritt <120a> erfolgt anschließend eine Adsorption von Kohlenstoffdioxid 48 aus dem getrockneten Luftstrom 68 mit einem Physisorbenten 23 in einem zweiten Prozessraum 27. Steht weniger Energie zur Verfügung, ist es hilfreich, das Verhältnis aus energieintensiver Desorptionszeit zur Adsorptionszeit zu verringern. Dabei wird vorzugsweise die Adsorptionszeit zur Aufnahme des Kohlenstoffdioxids 48 konstant gehalten und die Desorptionszeit entsprechend verlängert. Soll die Dauer der Prozesse im ersten Prozessraum 26 und im zweiten Prozessraum 27 synchron bleiben, kann alternativ der Luftmassenstrom verringert werden, sodass sowohl Adsorptionsdauer, also auch Desorptionsdauer beziehungsweise die Trocknungszeit verlängert werden können.

In einem Verfahrensschritt <130a> erfolgt eine Desorption des in dem Physisorbenten 23 adsorbierten Kohlenstoffdioxids 48, wobei das Kohlenstoffdioxid 48 in den zweiten Prozessraum 27 abgegeben wird. Steht weniger Energie zur Verfügung, so kann der zweite Prozessraum 27 weniger schnell aufgeheizt werden und/oder ein Unterdruck im zweiten Prozessraum 27 erzeugt werden. Daher ist es vorteilhaft, bei konstanter Adsorptionszeit die Desorptionszeit entsprechend zu verlängern, um eine hinreichende Ausbeute an Kohlenstoffdioxid 48 zu erhalten.

In einem Verfahrensschritt <140a> wird das in dem zweiten Prozessraum 27 desorbierte Kohlenstoffdioxid 48 aus dem zweiten Prozessraum 27 abgeführt und in einer Speichereinheit 16 eingelagert.

### Bezugszeichenliste

- 10: Anlage zur Abtrennung von Kohlenstoffdioxid
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolith
- 26: erster Prozessraum
- 27: zweiter Prozessraum
- 28: Verschlusselement

- 30: Einlassklappe
- 32: Auslassklappe
- 34: Heizelement
- 36: Kühlelement
- 38: Wärmetauscher

- 40: Wetterprognosemodul
- 42: Sensor für Luftfeuchte
- 44: Sensor für Windgeschwindigkeit
- 46: Sensor für Sonneneinstrahlung
- 47: Temperatursensor
- 48: Kohlenstoffdioxid

- 50: Steuerungseinrichtung
- 52: Speichereinheit
- 54: Recheneinheit
- 56: Computerprogrammcode

- 60: Windkraftanlage
- 62: Solaranlage
- 64: Antriebseinheit
- 66: Leistungsregelung
- 68: Luftstrom

- 70: Bypass
- 72: Unterdruckpumpe
- 74: Trocknungsmaterial
- 76: Datenverbindung
- 78: Datenquelle

## Patentansprüche

1. Verfahren zur Abtrennung von Kohlenstoffdioxid aus der Umgebungsluft in einer Anlage (10) zur Abtrennung von Kohlenstoffdioxid, umfassend folgende Schritte:
- Bestimmung von aktuellen und/oder zukünftigen Wetterparametern am Standort der Anlage (10),
- Fördern eines Luftstroms (68) der Umgebungsluft in einen ersten Prozessraum (26), wobei der Luftstrom (68) in dem ersten Prozessraum (26) getrocknet wird,
- Adsorbieren von Kohlenstoffdioxid (48) aus dem getrockneten Luftstrom (68) mit einem Physisorbenten (23) in einem zweiten Prozessraum (27),
- Desorbieren des in dem Physisorbenten (23) adsorbierten Kohlenstoffdioxids (48), und
- Einlagern des desorbierten Kohlenstoffdioxids (48) in einer Speichereinheit (16),
wobei eine Anpassung der Prozesszeiten der Anlage (10), der Leistungsparameter der Anlage (10) und/oder des Luftstroms durch die Anlage (10) in Abhängigkeit von den aktuellen oder zukünftigen Wetterparametern erfolgt.

2. Verfahren nach Anspruch 1, wobei die Anpassung der Prozesszeiten, der Leistungsparameter und/oder des Luftstroms in Abhängigkeit einer Prognose für die Wetterparameter für einen definierten Vorhersagezeitraum erfolgt.

3. Verfahren nach Anspruch 1 oder 2, wobei die Wetterparameter eine Windrichtung und/oder eine Windstärke am Standort der Anlage (10) umfassen.

4. Verfahren nach einem der Ansprüche 1 bis 3, wobei die Wetterparameter eine Temperatur am Standort der Anlage (10) umfassen.

5. Verfahren nach einem der Ansprüche 1 bis 4, wobei die Wetterparamater eine relative Luftfeuchtigkeit der Umgebungsluft am Standort der Anlage (10) umfassen.

6. Verfahren nach einem der Ansprüche 1 bis 5, wobei die Wetterparameter eine Stärke der Sonneneinstrahlung und/oder eine Verschattung am Standort der Anlage (10) umfassen.

7. Verfahren nach einem der Ansprüche 1 bis 6, wobei eine Anpassung der Prozesszeiten durch eine Ansteuerung von Verschlusselementen erfolgt, welche zumindest einen der Prozessräume (26, 27) verschließen.

8. Verfahren nach einem der Ansprüche 1 bis 7, wobei eine Anpassung der Prozesszeiten durch eine Anpassung des Luftstroms durch die Anlage (10) erfolgt.

9. Verfahren nach einem der Ansprüche 1 bis 8, wobei eine Anpassung der Leistungsregelung für ein Förderelement zur Förderung des Luftstroms durch die Anlage (10) und/oder durch eine Anpassung der Heizleistung des Heizelements (34) erfolgt.

10. Verfahren nach einem der Ansprüche 1 bis 9, wobei eine Prozesszeit der Desorption im Verhältnis zur Prozesszeit der Adsorption verlängert wird, wenn die Wetterdaten erwarten lassen, dass eine reduzierte Energiemenge zur Versorgung der Anlage (10) aus erneuerbaren Energien verfügbar ist.

11. Verfahren nach einem der Ansprüche 1 bis 10, wobei die Anlage (10) abgeschaltet wird, wenn die Wetterdaten erwarten lassen, dass die zur Prozessführung notwendige Energie nicht durch erneuerbare Energien aus Windkraft oder Solarkraft bereitgestellt werden kann.

12. Anlage (10) zur Abtrennung von Kohlenstoffdioxid aus der Umgebungsluft, umfassend:
- ein Förderelement zur Förderung eines Luftstroms (68) der Umgebungsluft in einen ersten Prozessraum (26), wobei der Luftstrom (68) in dem ersten Prozessraum (26) getrocknet wird,
- eine Sorptionseinheit (14) zum Adsorbieren von Kohlenstoffdioxid (48) aus dem getrockneten Luftstrom (68) mit einem Physisorbenten (23) in einem zweiten Prozessraum (27), sowie zum anschließenden Desorbieren des in dem Physisorbenten (23) adsorbierten Kohlenstoffdioxids (48), und
- eine Speichereinheit (16) zum Einlagern des desorbierten Kohlenstoffdioxids (48),
- ein Wetterprognosemodul (40), sowie
- eine Steuerungseinheit (50), wobei die Steuerungseinheit (50) dazu eingerichtet ist, ein Verfahren nach einem der Ansprüche 1 bis 9 auszuführen.

13. Anlage (10) zur Abtrennung von Kohlenstoffdioxid nach Anspruch 12, wobei der erste Prozessraum (26) und/oder der zweite Prozessraum (27) einen Bypass (70) aufweisen, durch welchen der Luftstrom (68) an der Trocknungseinheit (12) und/oder an der Sorptionseinheit (14) vorbeigeführt werden kann.

14. Anlage (10) zur Abtrennung von Kohlenstoffdioxid nach Anspruch 12 oder 13, wobei die Anlage (10) mit einer Windkraftanlage (60) und/oder einer Solarkraftanlage (62) verbunden ist, welche die elektrische Energie zur Energieversorgung der Anlage (10) bereitstellt.

15. Anlage (10) zur Abtrennung von Kohlenstoffdioxid nach einem der Ansprüche 12 bis 14, wobei das Wetterprognosemodul (40) über eine Datenverbindung (76) mit einer externen Datenquelle (78) verbunden ist, welche die Wetterdaten zur Verfügung stellt.
